(19)

Europäisches Patentamt
European Patent Office
Office européen des brevets

(11) **EP 2 083 504 A1**

(12) **EUROPEAN PATENT APPLICATION**

(43) Date of publication:
**29.07.2009 Bulletin 2009/31**

(51) Int Cl.:
***H02K 3/28*** (2006.01)

(21) Application number: **08172297.7**

(22) Date of filing: **19.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.12.2007 IT RM20070673**

(71) Applicant: **Onorato, Carmine**
**86170 Isernia (IT)**

(72) Inventor: **Onorato, Carmine**
**86170 Isernia (IT)**

(74) Representative: **Sarpi, Maurizio**
**IJ SRL**
**Via R. Cadorna, 29**
**00187 Rome (IT)**

(54) **Three-phase and/or single-phase alternator**

(57) Described herein is an electric machine that can be used as alternator, which comprises a plurality of windings appropriately sized and appropriately connected to one another, as well as purposely provided drawing points already pre-arranged for connecting three-phase and/or single-phase loads, from which all the power and/or a fraction of the power of the alternator itself is drawn. Said alternator is able to supply a three-phase load, supplying thereto up to all the power and/or being able to supply simultaneously two single-phase loads, supplying to a first single-phase load a power lower than or equal to 2/3 of the power of the alternator itself, and to a second single-phase load a power lower than or equal to 1/3 of the power of the alternator.

The sum of the power absorbed at any given moment by all the loads connected is lower than or equal to the power supplied by the alternator itself.

FIG. 1

EP 2 083 504 A1

**Description**

The present invention relates to an innovative three-phase and/or single-phase alternator.

Currently, it is known that in the case of three-phase alternators the power that can be drawn for each phase is not higher than 1/3 of the overall power of the alternator. In other words, a generator of a known type having, for example, a power of 3 kW is able to supply a three-phase load with a power of up to 3 kW or else three single-phase loads each of which is supplied with a power that does not exceed 1 kW.

This entails the drawback that, in order to supply a single-phase load that absorbs 2 kW of power, it is currently necessary to use an alternator of at least 6 kW.

A second drawback of current alternators is represented by the fact that, as is known, for supply of a three-phase load the phases must be star-connected, whilst for supply of one or more single-phase loads with the same electric machine, said phases must be disconnected and then be reconnected in a triangle configuration. This entails the disadvantage that, in order to pass from a three-phase supply to a single-phase supply (or vice versa), it is necessary to modify physically the connections of the ends of the windings.

Consequently, the main purpose of the present invention is to overcome said drawbacks by providing an alternator which can make available 2/3 of its own power across a first drawing point and the remaining 1/3 of the power across a second drawing point. This means that, according to the invention, it is possible to supply a three-phase load making available thereto all the power of the alternator or else supply two single-phase loads, one of which can absorb a power of up to 2/3 of the power of the alternator, whilst the other can absorb a power of up to 1/3 of the power of the alternator.

A further purpose is to be able to supply simultaneously three-phase and single-phase loads, in which the overall power absorbed at each moment by all the loads is obviously lower than or equal to the power supplied by the alternator.

The above has been obtained by providing an alternator which comprises a plurality of windings appropriately sized and appropriately connected to one another, as well as purposely provided drawing points already pre-arranged for connecting simultaneously thereto three-phase and/or single-phase loads without modifying any connection.

A better understanding of the invention will be obtained from the ensuing detailed description and with reference to the attached plates of drawings, which show, purely by way of example, some preferred embodiments.

In the plates of drawings:

Figure 1 shows a diagram of principle of a first embodiment of the invention that regards a synchronous three-phase alternator provided with a first drawing point for a 380-V three-phase load and with two drawing points for 220-V single-phase loads;

Figures 2A and 2B are a schematic illustration, with reference to the diagram of Figure 1, of the directions of the current for each pair of windings in series of one and the same phase;

Figure 2C shows the physical connection between the two windings connected in series of Figures 2A and 2B;

Figure 3 shows a variant of the diagram of principle of Figure 1, which envisages addition of capacitors for use of the alternator in an asynchronous way;

Figure 4 shows the diagram of principle of a second embodiment of a synchronous alternator;

Figure 5 shows a variant of the diagram of principle of Figure 4, which envisages the addition of capacitors for use of the alternator in an asynchronous way;

Figure 6 shows the diagram of principle of a third embodiment of a synchronous single-phase alternator;

Figure 7 shows a variant of the diagram of principle of Figure 6, which envisages the addition of capacitors for use of the single-phase alternator in an asynchronous way;

Figure 8 shows the diagram of principle of a fourth embodiment of an asynchronous alternator;

Figure 9 shows a second variant of the first embodiment of Figure 1, in which each winding has been replaced by two windings connected in parallel;

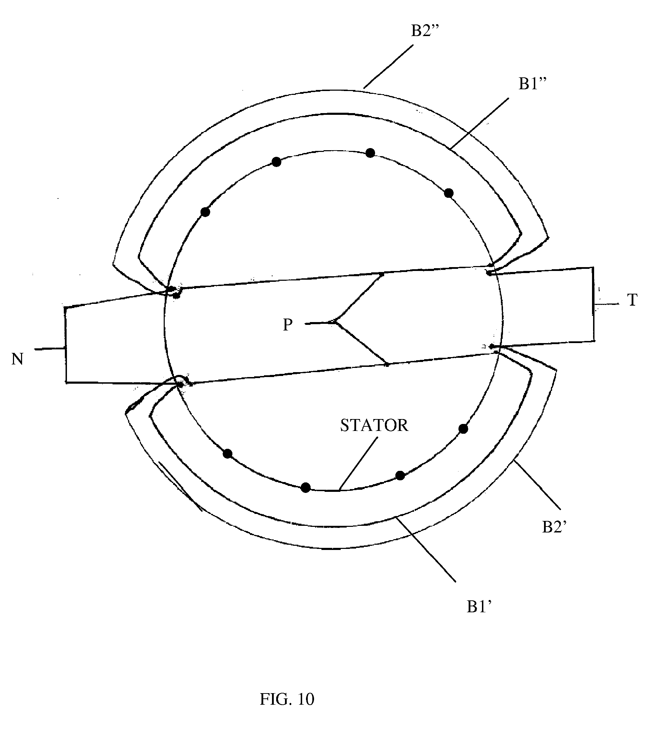

Figure 10 shows the physical connection between two windings connected in parallel for a two-pole machine;

Figures 11 and 12 show, respectively, a third variant and a fourth variant of the first embodiment of Figure 1;

Figure 13 shows a branch of the second variant of Figure 9 in which each winding of a pair of windings connected in parallel has been replaced by two windings set in series; and

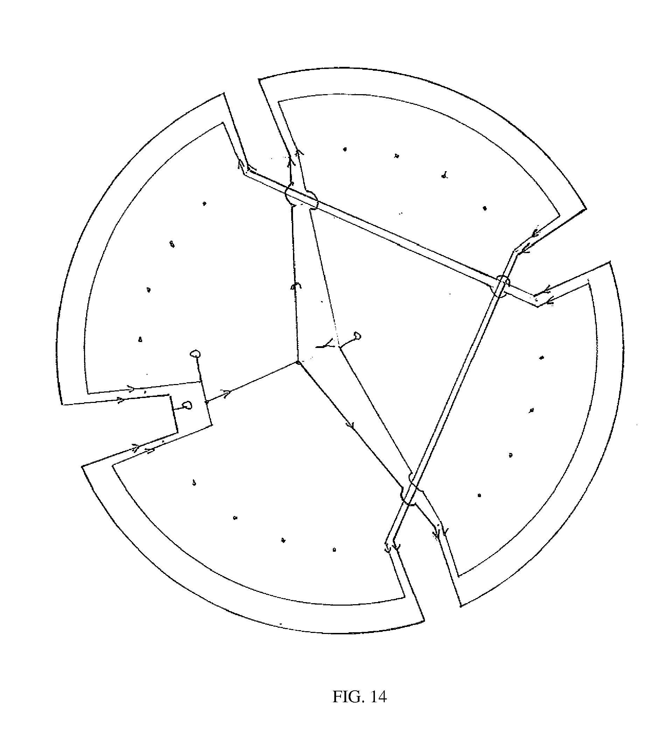

Figure 14, which is similar to Figure 10, shows the connection for a four-pole machine.

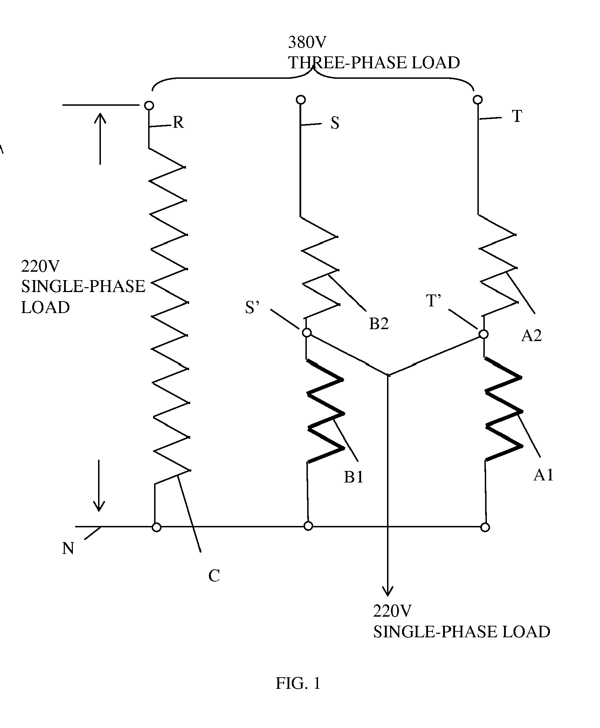

In the first embodiment that is described herein, shown in Figure 1, there is envisaged an alternator, which is able to supply a 380-V three-phase load connected to the points R-S-T, and simultaneously a first 220-V single-phase load and a second 220-V single-phase load, connected, respectively, to the points S'-T' and to the points R-N.

According to a peculiar characteristic of the invention, the three-phase load can absorb up to the entire power of the alternator, whilst the first single-phase load can absorb up to 2/3 of the power of the alternator, and the second single-phase load can absorb up to 1/3 of the power of the alternator. Obviously, the sum of the power absorbed at any given moment by all the loads connected cannot be higher than the power of the alternator itself.

From the electromagnetic standpoint, the diagram of principle of said alternator comprises:

- two windings A1 and A2 connected in series, in which the winding A2 has its free end T for use by loads, and the winding A1 has its free end N connected to neutral;
- two further windings B1 and B2 connected in series,

in which the winding B2 has its free end S for use by loads, and the winding B1 has its free end N connected to neutral;

- a winding C having a free end R for use by loads and the other end N connected to neutral; as well as
- purposely provided points for drawing off the power for connecting three-phase and/or single-phase loads with star connection alone, without resorting to the triangle connection.

The free ends S and T of the respective windings B2 and A2 are designed to be used, together with the free end R of the winding C, for supplying 380-V three-phase loads, whilst the same free end R of the winding C can be used, together with the end N connected to neutral, for supplying 220-V single-phase loads.

The drawing points T' and S', positioned respectively between the windings A1, A2 and B1, B2, are designed to be used for supplying a further 220-V single-phase load.

The end N connected to neutral represents the star centre of the circuit.

As already mentioned, said windings A1, A2, B1 and B2 are appropriately sized and connected to one another in such a way that 2/3 of the power of the alternator can be drawn across a first drawing point, the terminals of which are connected to T' and S', whilst 1/3 of the power can be drawn from a second drawing point set between the free end R of the winding C and the end N connected to neutral. At the same time, the 380-V three-phase load can be connected to the points R-S-T.

The sections of the wires that constitute the windings A2 and B2 are equal to the section of the winding C, whilst the sections of the wires that constitute the windings A1 and B1 are the same as one another and oversized with respect to the sections of the above wires by a factor of $\sqrt{3}$.

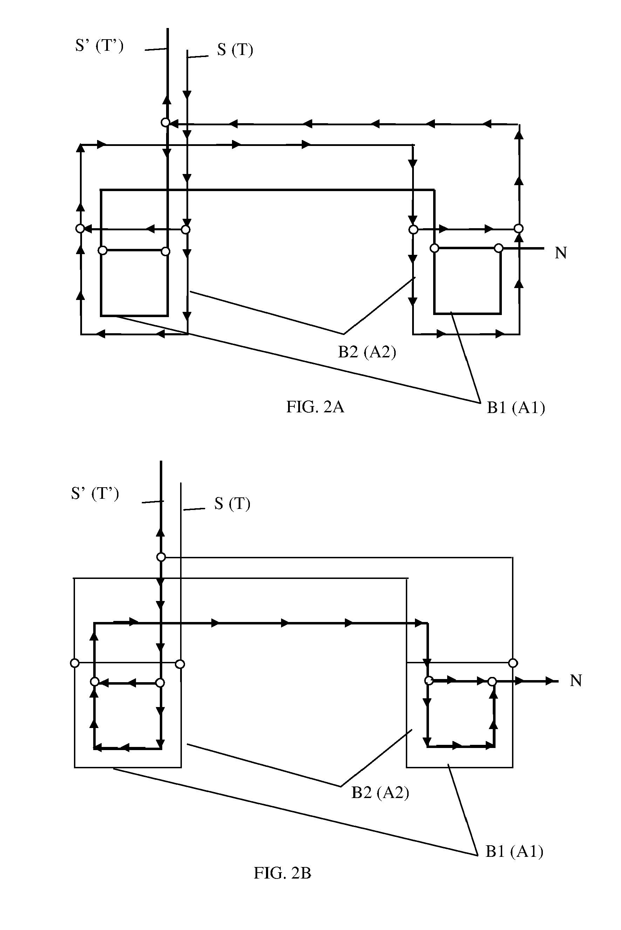

Figures 2A and 2B are a schematic illustration of how the two further windings B1, B2 (or A1, A2) are connected and the direction of the currents that flow therein, in the case where the sense of the current is the one entering the winding B2. It should be emphasized that said representation applies for a pair of windings of one and the same phase. It is thus evident that the same representation can be used for the windings A1, A2.

It should be emphasized that, observing the directions of the currents and the connections of the windings A1 and A2 and of the two further windings B1 and B2, it may be readily appreciated that the electric machine is a machine with alternating poles, but the same inventive idea can advantageously be applied to a machine with homonymous poles by appropriately adapting the windings.

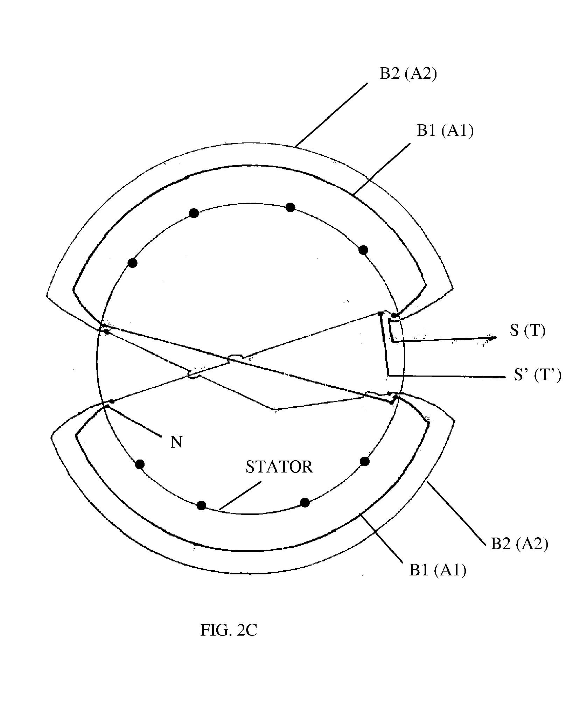

Figure 2C shows the physical connection between the windings B1 and B2 connected in series.

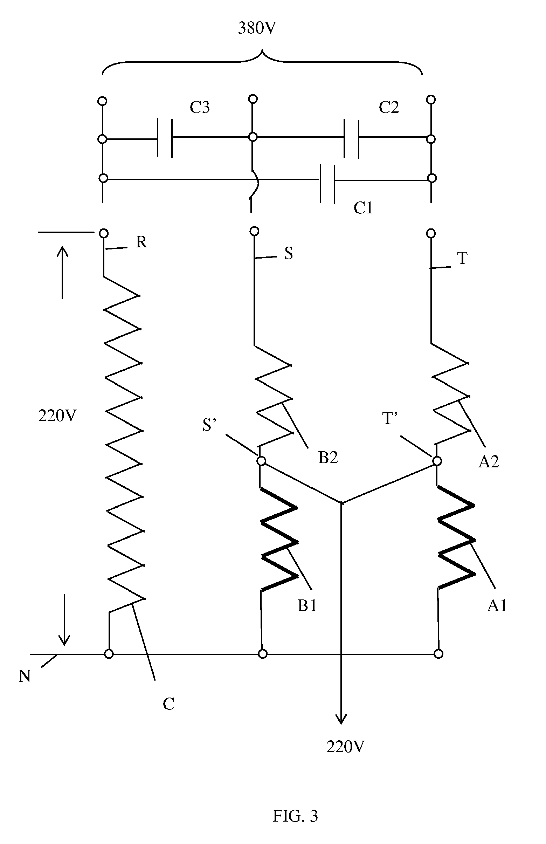

In a variant of the invention (shown in Figure 3), it is envisaged to use the alternator in an asynchronous way. For this purpose, the alternator is provided with a plurality of capacitors C1, C2 and C3 of appropriate capacitance, which is the same for all, and connected in a known way.

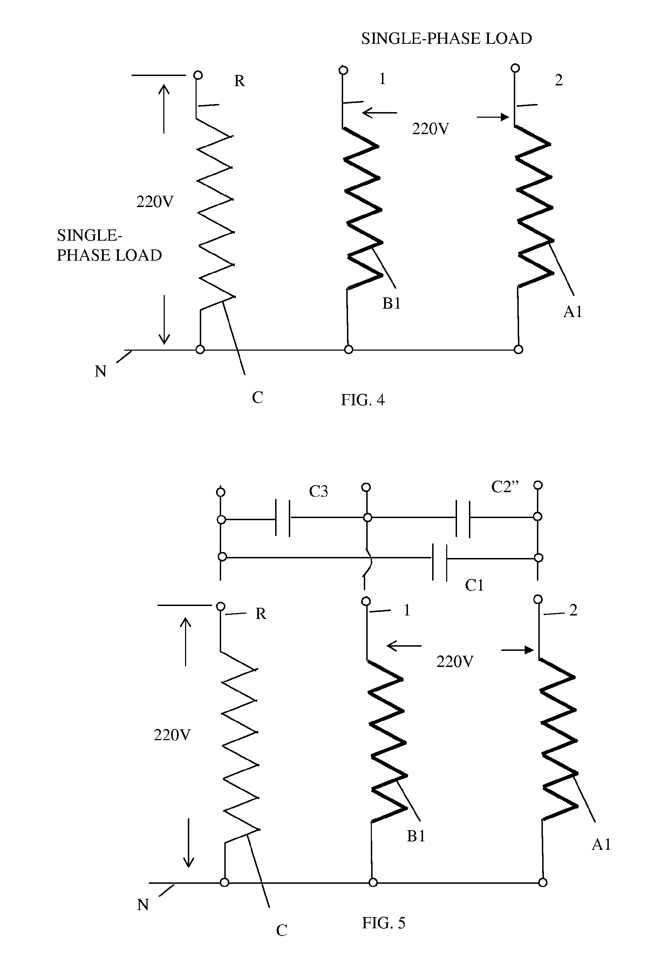

In a second embodiment, shown in Figure 4, the alternator is provided with two drawing points for 220-V single-phase loads and comprises three windings A1, B1 and C, each having a free end for use by 220-V loads respectively designated by 2, 1, and R, whilst the opposite end of each winding is a free end N connected to neutral.

2/3 of the power supplied by the alternator can be drawn across a first drawing point set between the free ends 1 and 2 of the windings A1 and B1, respectively, and 1/3 of the power can be drawn from a second drawing point set between the free end R of the winding C and the end N connected to neutral.

As for the first embodiment, it is possible to use the alternator in an asynchronous way. For this purpose, the alternator comprises a plurality of capacitors C1, C2", and C3 of appropriate capacitance and connected in a known way (Figure 5). The two capacitors C1 and C3 are the same as one another, whilst the capacitor C2" has a capacitance higher than that of said two capacitors C1 and C3.

It is interesting to note that two of said asynchronous alternators, once combined together, can be used indifferently as motor and alternator or as alternator and motor.

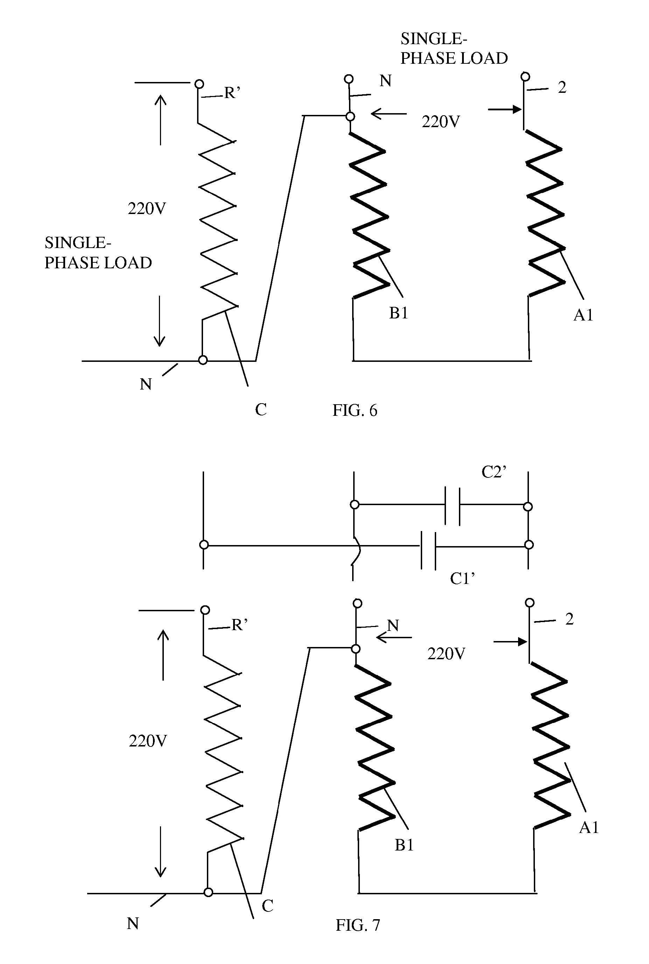

In a third embodiment shown in Figure 6, the alternator is provided with two drawing points for 220-V single-phase loads and comprises three windings A1, B1, and C, where the windings A1 and B1 are connected in series. The winding B1 has its free end N connected to neutral together with an end of the winding C.

In addition, the winding A1 has its free end 2 for use by 220-V loads, whilst the winding C has its remaining free end R' for use by 220-V loads.

The sections of the wires that constitute the windings A1 and B1 are the same as one another and oversized with respect to the section of the wire that constitutes the winding C by a factor of $\sqrt{2}$.

According to the invention, 2/3 of the power supplied by the alternator can be drawn from a first drawing point set between the free ends 2 and N of the respective windings A1 and B1, and 1/3 of the power can be drawn from a second drawing point set at the two ends R'-N of the winding C.

As for the previous embodiments, it is possible to use the alternator in an asynchronous way. For said purpose, the alternator comprises a plurality of capacitors C1' and C2' of appropriate capacitance, different from one another, and connected in parallel (Figure 7).

It should be noted that, in the diagrams of principle of the synchronous alternators described so far, the excitation windings have been omitted in order to highlight only the windings of interest.

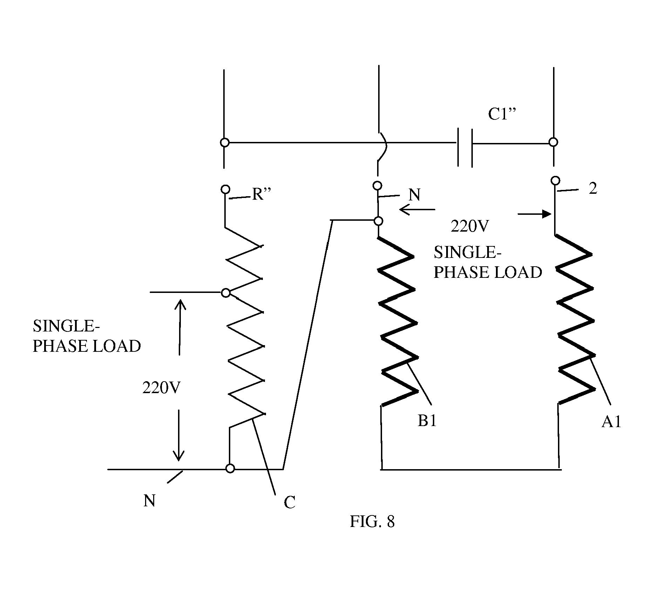

In a fourth embodiment shown in Figure 8, the alternator, which works only in an asynchronous way, is provided with two drawingpoints for 220-V single-phase loads and comprises three windings A1, B1, and C, where the windings A1, B1 are connected in series - with the winding A1 having its free end 2 for use by 220-V loads and with the winding B1 having its free end N connected to neutral together with an end of the winding C -, as well as a capacitor C1'' connected between the free end 2 of the winding A1 and the remaining free end R'' of the winding C.

The sections of the wires that constitute the windings, the windings A1 and B1 are the same as one another and oversized with respect to the section of the wire that constitutes the winding C by a factor of $\sqrt{2}$.

According to the invention, 2/3 of the power supplied by the alternator can be drawn from a first drawing point set at the terminals 2 and N of the in-series windings A1 and B1, whilst, from a second drawing point, set between the neutral N and a point along the winding C, it is possible to draw a power equal to 1/3 of the power of the alternator minus the excitation power.

The present invention has been described and illustrated in some preferred embodiments thereof, but it is evident that technically equivalent modifications and/or replacements may be made by a person skilled in the sector, without thereby departing from the sphere of protection of the present industrial patent right.

For example, a modification could regard the fact that each of said windings A1 and/or A2 and/or B1 and/or B2 and/or C can comprise even a number of windings connected in series to one another according to the voltage required. In other words, the number of windings per phase can be varied as a function of the ratio between the voltages of the windings themselves.

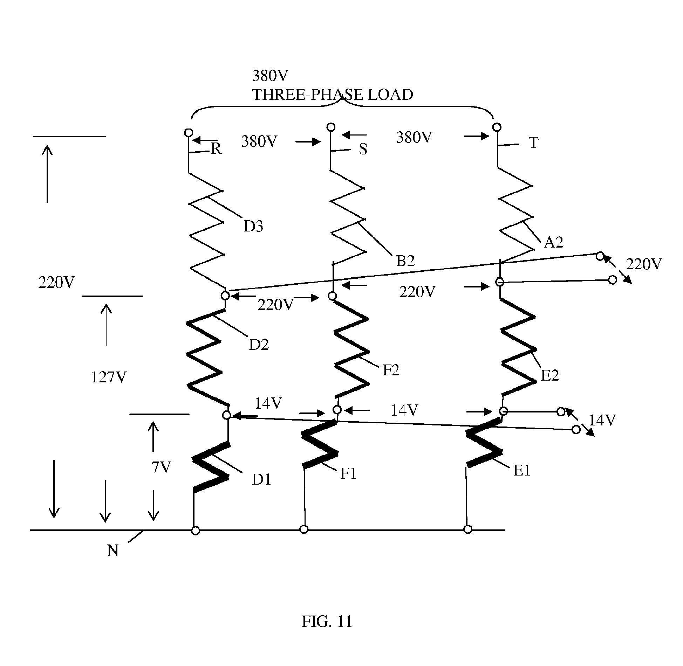

For example, in a fourth variant shown in Figure 11, each winding A1, B1, and C has been replaced by a plurality of windings connected in series.

In the example that is described, the winding A1 has been replaced by two windings E1 and E2 connected in series, with the winding E1 having its free end N connected to neutral, the winding B1 has been replaced by two windings F1 and F2 connected in series, with the winding F1 having its free end N connected to neutral, and the winding C has been replaced by three windings D1, D2, and D3 connected in series, with the winding D1 having its free end N connected to neutral.

In this way, it is possible to establish a plurality of drawing points of the power for connecting three-phase and/or single-phase loads according to the requirements. Said drawing points are pre-arranged between the windings.

For example, the terminals of a first drawing point are positioned between the windings E1, E2 and the windings F1, F2, the terminals of a second drawing point are positioned between the windings F1, F2 and the windings D1, D2, the terminals of a third drawing point are positioned between the windings E2, A2 and the windings F2, B2, and the terminals of a fourth drawing point are positioned between the windings F2, B2 and the windings D2, D3. In addition, the terminals of a fifth drawing point can be taken at the terminals of the winding D1, and the terminals of a sixth drawing point can be taken at the terminals of the in-series windings D1 and D2.

In the example that is described, the sections of the windings E1, F1, and D1 are the same as one another and oversized, according to the voltage and power envisaged, as compared to the sections of the windings E2, F2, and D2, which are the same as one another. The sections of the windings E2, F2, and D2 are oversized, according to the voltage and power envisaged, as compared to those of the windings A2, B2, and D3, which are the same as one another.

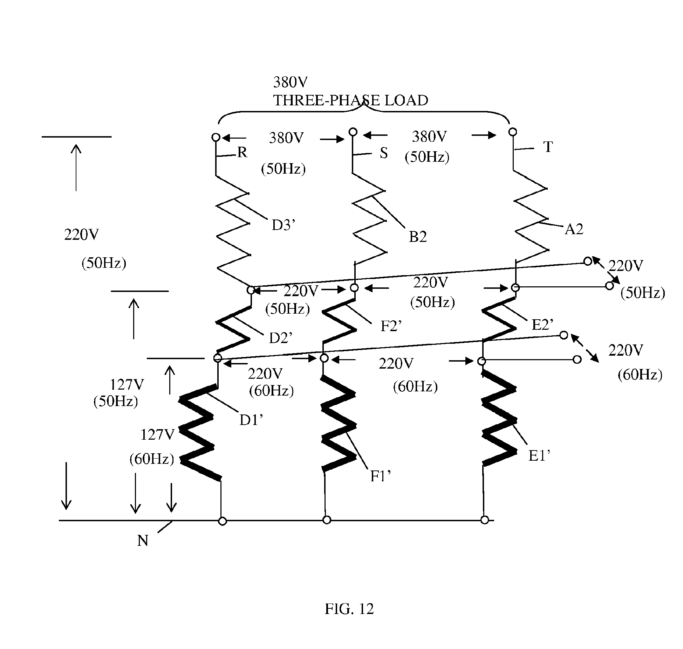

The same may be said for the diagram of principle of a fifth variant shown in Figure 12, in which the windings A1 and B1 (of Figure 1) have been replaced, respectively, by two windings E1', E2' and F1' and F2' connected in series, and the winding C (of Figure 1) has been replaced by three windings D1', D2' and D3' connected in series.

In this case, the machine can function at 3000 rpm or 3600 rpm, respectively, with a frequency of 50 Hz (220 V - 380 V) or 60 Hz (127 V - 220 V) enabling drawing of the voltage and power envisaged at the purposely provided drawing points indicated in Figure 12.

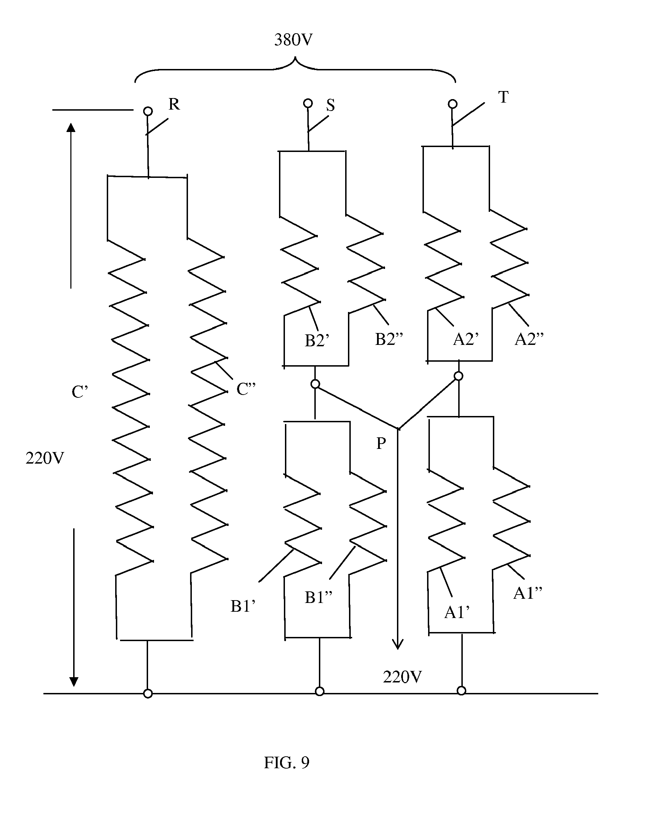

A further possible modification could consist in the fact that each of said windings A1, A2, B1, B2, and C can be replaced by two windings connected in parallel (Figure 9).

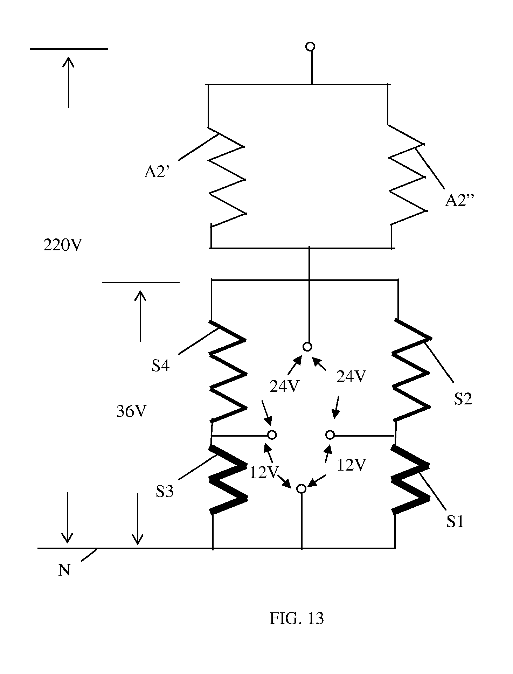

Figure 13 is a schematic illustration of a single branch of the second variant of Figure 9, where each of the windings A1'' and A1' is replaced by two windings S1, S2 and S3, S4, respectively, connected in series.

The sections of the windings S1 and S3 are the same as one another and oversized, according to the voltage and power envisaged, as compared to those of the windings S2 and S4, which are the same as one another. In turn, the sections of the windings S2 and S4 are oversized, according to the voltage and power envisaged, as compared to those of the windings A2'' and A2', which are the same as one another.

In the example described the number of turns of the windings S2 and S4 is twice the number of the turns of the windings S1 and S3.

Also in this case, it is possible to draw power form a plurality of drawing points.

For example, the terminals of a first drawing point are positioned at the terminals of the winding S1, the terminals of a second drawing point are positioned at the terminals of the winding S2, the terminals of a third drawing point are positioned at the terminals of the winding S3, and the terminals of a fourth drawing point are positioned at the terminals of the winding S4.

**Claims**

1. An electric machine that can be used as alternator, **characterized in that** it comprises a plurality of windings appropriately sized and appropriately connected to one another, as well as purposely provided drawing points already pre-arranged for connecting three-phase and/or single-phase loads, from the terminals of which all and/or a fraction of the power of the alternator itself is drawn; said alternator being able to supply a three-phase load supplying thereto up to the entire power and/or being able to supply simultaneously two single-phase loads, supplying to a first single-phase load a power lower than or equal to 2/3 of that of the alternator itself, and to a second single-phase load a power lower than or equal to 1/3 of that of the alternator; the sum of the power absorbed at each moment by all the loads connected being lower than or equal to the power supplied by the alternator itself.

2. The machine according to the preceding claim, **characterized in that** it comprises:

   - two windings (A1, A2) connected in series, in which the winding (A2) has its free end (T) for use by loads and the winding (A1) has its free end (N) connected to neutral;
   - two further windings (B1, B2) connected in series, in which the winding (B2) has its free end (S) for use by loads and the winding (B1) has its free end (N) connected to neutral;
   - a winding (C) having a free end (C) for use by loads and the other end (N) connected to neutral; as well as
   - a first drawing point designed to be used for supplying 220-V single-phase loads with a power lower than or equal to 2/3 of the power of the alternator; the terminals of said first drawing point being connected with appropriate points (T', S') that are positioned respectively between the windings (A1, A2) and the further windings (B1, B2);
   - a second drawing point designed to be used for supplying 220-V single-phase loads with a power lower than or equal to 1/3 of the power of the alternator; said second drawing point being set between its free end (R) of the winding (C) and its end (N) connected to neutral;

   said free ends (R, S, T) of the respective windings (C, B2, A2) being designed to be used for supplying a 380-V three-phase load.

3. The machine according to the preceding claim, **characterized in that** the sections of the wires that constitute the winding (A2) and the further winding (B2) are equal to the section of the winding (C), whilst the sections of the wires that constitute the winding (A1) and the further winding (B1) are the same as one another and oversized with respect to the sections of the previous wires by a factor of $\sqrt{3}$ .

4. The machine according to Claim 2 or Claim 3, **characterized in that**, in order to work in an asynchronous way, it is provided with a plurality of capacitors (C1, C2, C3) having appropriate capacitances, which are all the same as one another, and connected in a known way.

5. The machine according to Claim 1, **characterized in that** the alternator comprises:

   - three windings (A1, B1, C) each having a respective free end (2, 1, R) for use by 220-V single-phase loads, whilst each opposite end is a free end (N) connected to neutral; as well as
   - a first drawing point designed to be used for supplying 220-V single-phase loads with a power lower than or equal to 2/3 of the power of the alternator; said first drawing point being set between the free ends (1, 2) of the respective windings (A1, B1); and
   - a second drawing point designed to be used for supplying 220-V single-phase loads with a power lower than or equal to 1/3 of the power of the alternator; said second drawing point being set between the free end (R) of the winding (C) and its end (N) connected to neutral.

6. The machine according to the preceding claim, **characterized in that** the sections of the wires that constitute the winding (A1) and the winding (B1) are the same as one another and oversized with respect to the section of the wire that constitutes the winding

   (C) by a factor of $\sqrt{3}$ .

7. The machine according to Claim 5 or Claim 6, **characterized in that**, in order to work in an asynchronous way, it is provided with a plurality of capacitors (C1, C2'', C3) of appropriate capacitance and connected in a known way; two of said capacitors (C1, C3) being the same as one another, whilst the capacitor (C2'') having a capacitance greater than that of said two capacitors (C1, C3).

8. The machine according to Claim 1, **characterized in that** it comprises:

    - three windings (A1, B1, C) where the windings (A1, B1) are connected in series; said winding (B1) having its free end (N) that is connected to neutral; said winding (C) having a free end (N) connected to neutral; as well as
    - a first drawing point, designed to be used for supplying 220-V single-phase loads with a power equal to or lower than 2/3 of the power of the alternator; said first drawing point being set between the free ends (2) and (N) of the respective windings (A1) and (B1); and
    - a second drawing point, designed to be used for supplying 220-V single-phase loads with a power equal to or lower than 1/3 of the power of the alternator; said second drawing point being set between the free end (R') of the winding (C) and the end (N) connected to neutral.

9. The machine according to the preceding claim, **characterized in that** the sections of the wires that constitute the winding (A1) and the winding (B1) are the same as one another and oversized with respect to the section of the wire that constitutes the winding

    (C) by a factor of $\sqrt{2}$.

10. The machine according to Claim 8 or Claim 9, **characterized in that** said free end (N) of the winding (B1) and said end (N) of the winding (C), which are connected to neutral, are also connected to one another.

11. The machine according to Claim 8 or Claim 9 or Claim 10, **characterized in that**, in order to work in an asynchronous way, it is provided with a plurality of capacitors (C1', C2') of different capacitances and connected in parallel.

12. The machine according to Claim 1, **characterized in that** the alternator comprises:

    - three windings (A1, B1, C), in which said winding (A1) has its free end (2) for use by 220-V single-phase loads, said winding (B1) has its free end (N) connected to neutral, and said winding (C) has its free end (R'') and the other end (N) connected to neutral; said windings (A1, B1) being connected in series;
    - a first drawing point, designed to be used for supplying 220-V single-phase loads with a power equal to or lower than 2/3 of the power of the alternator; said first drawing point being set at the ends (2, N) of the in-series windings (A1, B1);
    - a second drawing point, designed to be used for supplying 220-V single-phase loads with a power equal to 1/3 of the power of the alternator minus the excitation power; said second drawing point being set between the neutral (N) and a point along said winding (C); as well as
    - a capacitor (C1'') connected between the free end (2) of the winding (A1) and the other remaining free end (R'') of the winding (C).

13. The machine according to the preceding claim, **characterized in that** the sections of the wires that constitute the winding (A1) and the winding (B1) are the same as one another and oversized with respect to the section of the wire that constitutes the winding

    (C) by a factor of $\sqrt{2}$.

14. The machine according to Claim 12 or Claim 13, **characterized in that** said free end (N) of the winding (B1) and said end (N) of the winding (C), which are connected to neutral, are also connected to one another.

15. The machine according to Claim 12 or Claim 13 or Claim 14, **characterized in that** 2/3 of the power supplied by the alternator can be drawn across a first drawing point set between the free ends (2) and (N) of the respective windings (A1) and (B1), and 1/3 of the power supplied by the alternator, minus the excitation power, that can be drawn from the second drawing point set precisely on the winding (C).

16. The machine according to any one of the preceding claims, **characterized in that** each winding of the alternator also comprises a number of windings connected in series to one another, as a function of the voltage required.

17. The machine according to any one of Claims 1 to 15, **characterized in that** each winding is replaced by two windings connected in parallel.

18. An electric machine, comprising in combination two alternators that work in an asynchronous way according to Claim 7, **characterized in that** said two alternators are used indifferently, a first one as motor and a second one as alternator, or else a first one as alternator and a second one as motor.

380V
THREE-PHASE LOAD

R

S

T

220V
SINGLE-PHASE
LOAD

S'

B2

T'

A2

B1

A1

N

C

220V
SINGLE-PHASE LOAD

FIG. 1

7

S' (T')     S (T)

N

B2 (A2)

FIG. 2A     B1 (A1)

S' (T')     S (T)

N

B2 (A2)

B1 (A1)

FIG. 2B

FIG. 2C

380V

C3 C2

C1

R

S

T

220V

S'

B2

T'

A2

B1

A1

N

C

220V

FIG. 3

SINGLE-PHASE LOAD

FIG. 4

FIG. 5

SINGLE-
PHASE LOAD

R'

N

2

220V

220V

SINGLE-
PHASE LOAD

B1

A1

N

C

FIG. 6

C2'

C1'

R'

N

2

220V

220V

B1

A1

N

C

FIG. 7

FIG. 8

FIG. 9

FIG. 10

380V
THREE-PHASE LOAD

FIG. 11

FIG. 12

FIG. 13

FIG. 14

| | Europäisches Patentamt European Patent Office Office européen des brevets | **EUROPEAN SEARCH REPORT** | Application Number EP 08 17 2297 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 034 511 A (SCOTT HAROLD C [US] ET AL) 7 March 2000 (2000-03-07) * abstract; figure 6 * ----- | 1-18 | INV. H02K3/28 |
| A | US 2002/057030 A1 (FOGARTY JAMES MICHAEL [US]) 16 May 2002 (2002-05-16) * abstract; figure 7 * ----- | 1-18 | |
| A | DE 759 076 C (SIEMENS AG) 8 June 1954 (1954-06-08) * abstract * ----- | 1-18 | |
| | | | TECHNICAL FIELDS SEARCHED (IPC) H02K |

The present search report has been drawn up for all claims

| Place of search | Date of completion of the search | Examiner |
|---|---|---|
| Munich | 18 June 2009 | Kampka, Achim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 17 2297

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2009

| Patent document cited in search report | | Publication date | Patent family member(s) | | Publication date |
|---|---|---|---|---|---|
| US 6034511 | A | 07-03-2000 | NONE | | |
| US 2002057030 | A1 | 16-05-2002 | CH | 695809 A5 | 31-08-2006 |
| | | | US | 6455974 B1 | 24-09-2002 |
| DE 759076 | C | 08-06-1954 | NONE | | |

EPO FORM P0459

For more details about this annex : see Official Journal of the European Patent Office, No. 12/82